# EUROPEAN PATENT APPLICATION

(11) **EP 1 617 315 A1**
(43) Date of publication of application: **18.01.2006**
(21) Application number: 04016481.6
(22) Date of filing: 13.07.2004
(51) Int. Cl.: G06F 1/32

(54) **Adaptive time-out system**

(71) Applicant: Harman Becker Automotive Systems GmbH, 76307 Karlsbad (DE)
(72) Inventor: Menzl, Thomas, Villingen (DE)
(74) Representative: Grünecker, Kinkeldey, Stockmair & Schwanhäusser Anwaltssozietät

(57) **Abstract**

The present invention provides a sleep timer taking the individual user behaviour into account. While in conventional sleep timers, the time interval before a device is powered off or set into standby is either fixed or has to be manually selected from a preset range of values, the sleep timer of the present invention automatically adjusts the time interval on the basis of an evaluation of the user's interaction history with the device. Moreover, the user can define an individual standby strategy by setting the sleep timer's parameters accordingly.

## Description

The present invention relates to a sleep timer and a method for controlling the power state of a device. In particular, the present invention relates to a module for automatically changing the power state of a variety of devices at a predetermined point of time.

During the last years, more and more consumer devices, for instance apparatuses for audio/visual recording are equipped with a so-called sleep timer. A sleep timer is a module that is used to power off the device or to set the device into standby at a predetermined point of time. The point of time is set such that the user has most likely finished to use the device, e.g. because the user has fallen asleep. In this way, power consumption can be reduced, for instance to save battery capacity, as well as unnecessary noise is avoided. With the ongoing cost reduction and miniaturisation of electronic circuits, such modules are also used in the field of office and general household equipment.

Conventional sleep timers are activated by the user himself by selecting a time interval (e.g. 45 minutes) out of a predefined range of values. The sleep timer will automatically switch off the device in accordance with the selected time interval, e.g. 45 minutes after the activation.

An alternative type of sleep timer known in the art does not require such a manual activation step. These sleep timers always switch off the device after a fixed time interval elapsed (e.g. 1 hour or 2 hours) without any user interaction. The length of the time interval cannot be altered.

A more sophisticated type of a sleep timer is described in European patent application EP-A-0 436 488. The descried sleep timer combines a conventional sleep timer with a so-called auto-mode. The auto-mode automatically switches off the device when a power supply is not needed anymore. In one of the described embodiments these sleep timers stop power supply when a tape recorder has reached the end of the tape or the broadcast has been completed, although the predetermined time interval has not yet elapsed.

A general problem of all these prior art types of sleep timers is that their operation does not reflect the individual situation of the user. Even if the user can select the sleep time interval out of a number of predefined time interval values, the user has to be aware in advance of the required time interval before falling asleep - with a minute-based accuracy. Accordingly, devices which include a conventional sleep timer are either switched off too early or too late.

In view of this prior art drawback, it is desirable to provide a sleep timer and a method for controlling the power state of a device that take the characteristics of the user's individual behaviour into account.

This is achieved by the features of the independent claims.

According to a first aspect of the present invention, a sleep timer for changing the power state of a controlled device in accordance with a sleep interval is provided. The sleep interval indicates the remaining time interval until automatic change of the power state. The sleep timer comprises a detecting unit for detecting user interactions with the controlled device. The sleep timer further comprises a memory for storing the user's interaction history with the controlled device. Further, the sleep timer comprises a sleep interval-setting unit for adjusting a current value of the sleep interval based on the stored interaction history. In addition, the sleep timer comprises a timing unit for determining a power state changing point of time based on the current sleep interval and the time elapsed from a last detected user interaction. At said power state changing point of time, a power state-changing unit of said sleep timer initiates a power state change of the controlled device.

According to another aspect of the present invention, a method is provided for changing the power state of a device in accordance with a sleep interval, said sleep interval indicating the remaining time interval until automatic change of the power state. The user interactions with the device are detected and the user's interaction history with the device is stored. Based on the stored interaction history, a current value of the sleep interval is adjusted. Based on the current sleep interval and the time elapsed from a last detected user interaction, a power state changing point of time is determined. At said power state changing point of time, a power state change of the device is initiated.

It is the particular approach of the present invention to replace a fixed sleep interval for switching off the controlled device after activation by a sleep interval which depends on the occurrence of user interactions with the controlled device. Hence, an adjustment of the sleep interval duration in accordance with the user interactions enables the switching off at more appropriate points of time to achieve an increased user convenience.

The sleep interval of a sleep timer in accordance with the present invention reflects the individual customs of a user, rather than a preset value. Moreover, there is no need for manually activating a sleep timer and it is not necessary for the user to decide in advance, when he or she intends to fall asleep.

In a preferred embodiment of the invention, the registration of a user interaction is performed by saving a time stamp indicating the current time (i.e. the absolute time value) when the user interacts with the device. Time differences between subsequent interactions can be calculated based on stored data and also memorized if needed for the further processing.

In accordance with another preferred embodiment of the invention, a time counter is employed for determining the data to be recorded based on the user interactions, namely to count the time interval between subsequent user interactions. For this purpose, the count value at the time of detecting a user interaction is memorized, the time counter is reset, and the counting operation is restarted. Accordingly, time intervals indicating the time between two interactions are determined directly in a simple manner.

Preferably, the collected interaction data is statistically evaluated and the current sleep interval is determined based on the evaluation result. Accordingly, the user's interaction frequency can be analyzed for determining a maximum or an average interval between two subsequent interactions and the sleep interval is set depending on the maximum or average interval length.

In a preferred embodiment of the invention, the evaluated statistical data is also stored in the memory. Upon detecting a new user interaction, the stored evaluation results are also taken into account such that the new results are based on the complete interaction history by only employing a minimum computational effort.

Preferably, a sleep timer according to the present invention additionally comprises means for inputting user instructions. These user instructions can additionally be taken into account when determining the sleep interval. In a preferred embodiment, these user instructions include an individual offset time that is added to the result obtained from the statistical evaluation.

Preferably, the user can select from a plurality of predefined alternatives on how to take the statistical evaluation result into account for determining the sleep interval. For instance, the statistical data to be used for the sleep interval adjustment can be the minimal value, the average value, the span, the median value of the sorted list or the maximum value of the time intervals between two subsequent user interactions.

Preferably, the alternative options which can be employed for the automatic sleep interval adjustment of the present invention are displayed to the user in form of a menu list.

In a preferred embodiment of the invention, the sleep timer may have a plurality of processing modes. Preferably, each of these processing modes is used at predefined periods within a day. For instance, it may be defined, that at daytime only interaction data of the user with the device are collected, while the power state change function of the sleep timer is not activated. During the nighttime period, the power state change function is activated. Moreover, the user interaction data are collected and evaluated separately for each time period.

Preferably, user instructions are taken into account for the pre-selection of sleep timer processing modes. For instance, the user can define the nighttime period to begin at 6 p.m. and to end at 2 a.m.

In a preferred embodiment of the present invention, the sleep timer notifies the user at a predetermined notification interval before the automatic power state change of the control device is executed. Accordingly, a user who has not yet fallen asleep at that point of time can react by any interaction to avoid the device being powered off.

Preferably, the time interval between a notification and a power state change can be individually set by the user. Depending on the type of the controlled device, the notification may be issued visually and/or acoustically.

In a preferred embodiment of the invention, the interaction data stored in the memory and the results of the statistical evaluation are displayed on a display to the user. This data may be used as a guideline by the user when selecting one of the predetermined processing alternatives or inputting individual parameters, such as an individual offset time.

Preferably, a sleep timer according to the present invention may be used to control a device which is one of a TV-set, a radio receiver, a video recorder, a CD-player, a DVD-player, a CD/DVD-changer, a vehicle entertainment and information device, an amplifier, a set-top box, a satellite receiver, a printer, a copying machine and a unit of household equipment.

Further preferred embodiments of the present invention are the subject matter of dependent claims.

Additional features and advantages of the present invention will become apparent from the following description of the invention as illustrated in the drawings, wherein:
Fig. 1 schematically illustrates a consumer device including a sleep timer for controlling the power supply;
Fig. 2 is a block diagram illustrating the configuration of a sleep timer in accordance with the present invention;
Fig. 3 is a block diagram of a preferred embodiment of the sleep timer according to the present invention comprising an evaluation unit for statistical evaluation of the user's interaction data;
Fig. 4 illustrates in block diagram form another preferred embodiment of the sleep timer in accordance with the present invention further comprising a timer mode selection unit, an input unit and a display;
Fig. 5 illustrates a configuration of another specific embodiment of the sleep timer according to the present invention;
Fig. 6 is a flow chart illustrating the operation of a sleep timer in accordance with the present invention for deciding whether or not an automatic power state change of a controlled device to be performed;
Fig. 7 is a flow chart for illustrating in accordance with a preferred embodiment of the present invention a statistical evaluation of user interaction data;
Fig. 8 is a flow chart illustrating a workflow according to a specific embodiment of the present invention, wherein a user is notified previously before the controlled device being switched to standby mode;
Fig. 9 illustrates the definition of two different time periods of the day to be used for the selection of a corresponding working mode of the sleep timer; and
Fig. 10 illustrates a part of a workflow of a preferred embodiment of the present invention, wherein the automatic change of the power state of the controlled device is activated during a certain period of the daytime.

The present invention relates to a sleep timer and a method for controlling the power state of a device. The sleep timer takes an individual user's "profile" of interaction with the device into account in order to determine a power state changing point of time. For this purpose, the user interaction (e.g. pressing a key on the remote control or on the device itself) is monitored. Every interaction of the user with the device is considered to represent a kind of "keep alive" message. For instance, if the device to be controlled is a TV set, a user usually zaps during the advert breaks through the channels or calls videotext pages.

By performing a statistical analysis based on the time intervals between subsequent user interactions, the present invention determines the user's behavioural characteristics, for instance, the minimal, the average and/or the maximum time interval between two subsequent user interactions. The sleep interval, i.e. the time elapsed before a power state change is initiated (e.g. a switch into a standby mode), is determined based on at least one of these calculated values. As the sleep timer is monitoring every user interaction and conducting a statistical analysis upon detection of each new interaction, the sleep interval is always adapted to the current usage.

The user can select between several standby strategies. For instance, the sleep interval is set to either the maximum or the average value of the interval between two subsequent user interactions plus an individual offset time. Such individual settings take into account that different users may have a different behaviour or different preferences, even if the results of the statistical analysis of their interaction history with the device is the same.

The operation of the sleep timer can be set to different modes to be used in different daytime periods. The start and end points of time of such periods may be defined by the user. The user can predefine the switching times between the predefined day time periods, define an individual standby strategy for every daytime period and enable or disable the automatic standby function for every daytime period.

The sleep timer according to the invention can be easily realized, as it can be implemented purely by a corresponding software, and no special hardware components are required. Thus, also an easy upgrade of existing sleep timers is possible.

The illustrated embodiments of the present invention will now be described with reference to the drawings.

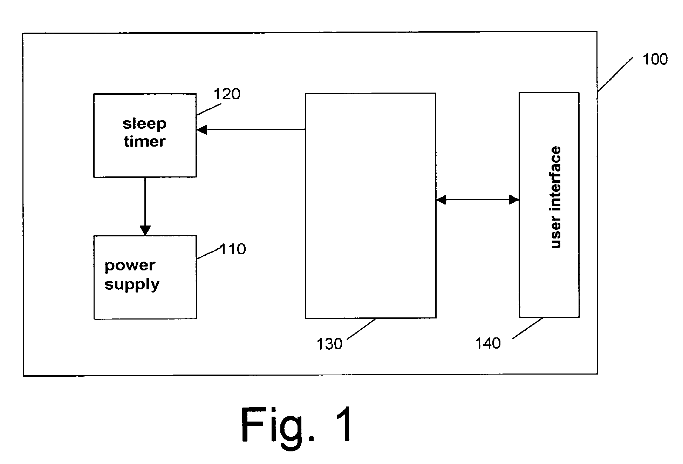

Fig. 1 illustrates a consumer device 100 including a power supply 110 and a sleep timer 120 which is controlling the operation of said power supply 110. A user interface 140 (for instance a remote control or a key board) enables the user to interact with the main functional body 130 of the device. The main functional body 130 of the device performs the main operation, e.g. receiving and processing television signals for display on a television screen, and supplies detected user interaction data to the sleep timer 120. Based on the received interaction data, the sleep timer 120 determines the points of time when to affect the power supply 110 to change the power state of the device.

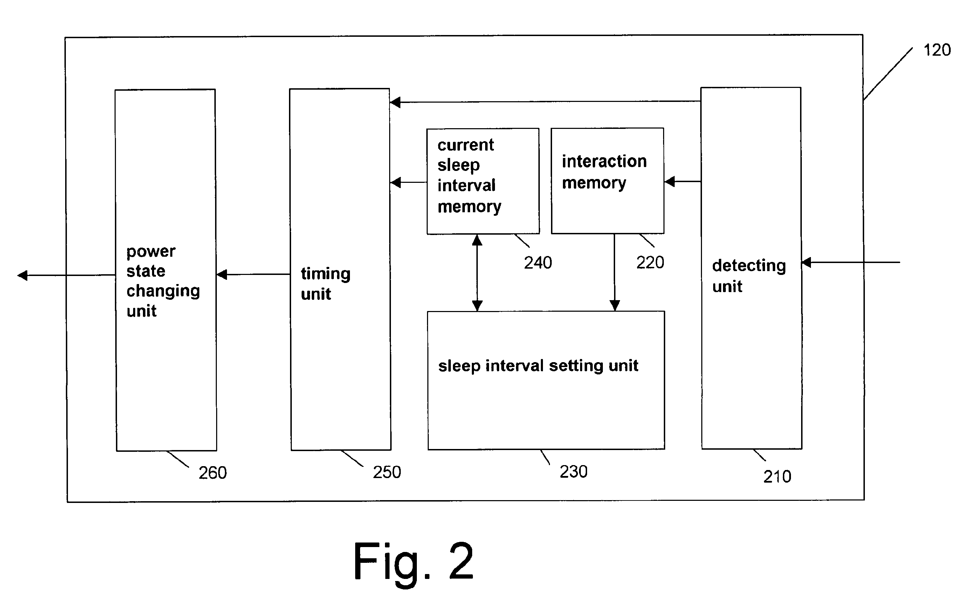

A configuration of the sleep timer 120 is illustrated in block diagram form in Fig. 2. The sleep timer 120 comprises a detecting unit 210, an interaction memory 220, a sleep interval-setting unit 230, a current sleep interval memory 240, a timing unit 250 and a power state-changing unit 260.

Each time the detecting unit 210 detects an interaction of the user with the device, the data reflecting details of the interaction is stored in interaction memory 220. The maximum number of interaction data that can be stored depends on the available memory space provided by the device. Preferably, the data are stored in said memory in a FIFO manner.

The sleep interval-setting unit 230 reads the data stored in interaction memory 220, analyses the stored data and defines a sleep interval. By increasing the number of data detected and memorized, the resulting sleep interval better corresponds to the long-time behaviour of the user. In contrast, a smaller number of detected data may be memorized in order to enable a faster adaptation to a change in the user's behaviour.

Every newly determined sleep interval value is stored in the current sleep interval memory 240 to update the sleep interval to be applied and to overwrite the value previously stored in the memory. According to a preferred embodiment of the invention, the sleep interval setting unit 230 refreshes the current sleep interval each time the user interacts with the device. For this purpose, the sleep interval setting unit 230 only reads out the time interval between the last two interactions from the interaction memory 220 and additionally takes the current sleep interval stored in the current sleep interval memory 240 into account. In this manner, a complete analysis of the stored interaction history can be avoided upon each detection of a new user interaction and the computational processing power required for performing the present invention can be reduced accordingly.

The timing unit 250 obtains the current sleep interval from memory 240 and counts the time elapsed after the last detected interaction. If the elapsed time is equal or larger than the current sleep interval value, a power state change is initiated.

Alternatively, timing unit 250 may start from any other value for measuring the elapsed time, for instance, the time when the controlled device has been powered on. This means that the power state of the device will be changed after a time interval to be adjusted based on the user's interaction history has elapsed since a fixed point of time, e.g. the time of powering on the device.

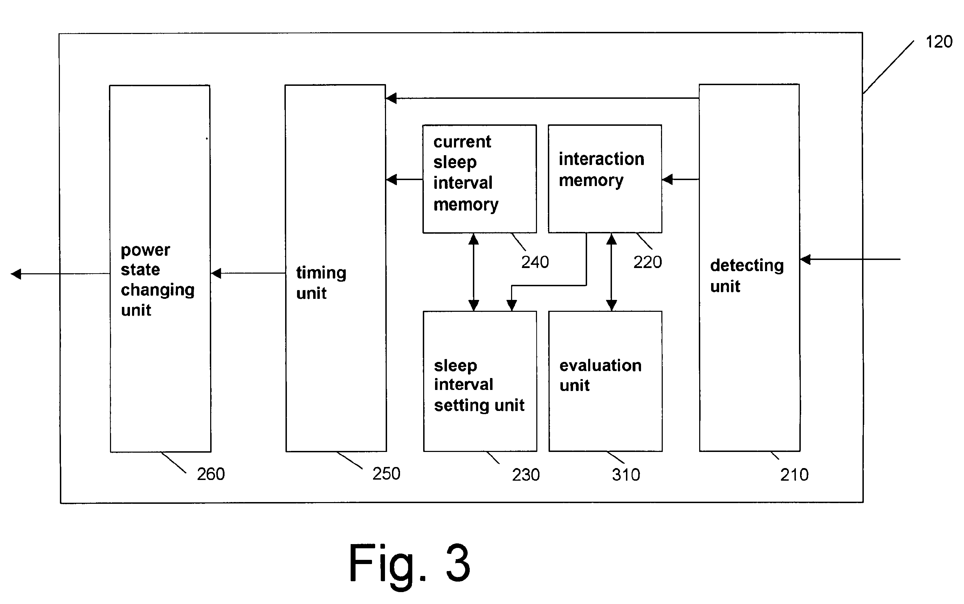

A specific embodiment of the present invention is illustrated in Fig. 3. In this embodiment, sleep timer 120 additionally comprises an evaluation unit 310. The evaluation unit receives the interaction data stored in the interaction memory 220. Based on the interaction history stored in the interaction memory 220, the evaluation unit performs a statistical evaluation. The evaluation result is also stored in a memory, preferably in the interaction memory 220.

The evaluation result includes statistical data such as the minimum length of a time interval between two subsequently detected user interactions, the maximum length of said interval, the average length of the interval, the span indicating the difference between the maximum and the minimum length, or the median value of the sorted list of interaction time intervals.

When calculating a median value, the evaluation unit 310 creates a sorted list of calculated time intervals between subsequent user interactions. The calculated values are arranged in an ascending/descending order from the minimum to the maximum value. The value in the middle of this list is selected as the median value. For instance, if the sorted list includes 9 calculated time interval values, the 5^{th} value of the list is selected as the median.

The skilled person is aware that any other statistical evaluation may be performed. In particular, the evaluation processing may calculate other values than those mentioned above, or only calculate a predefined subset of the above mentioned values for determining an updated sleep interval.

Alternatively, the statistical evaluation can be performed in a manner such that a more frequent occurrence of user interactions with the controlled device reflects the need to extend the sleep interval while a longer time period without any user interaction indicates the need to shorten the time interval before switching off the controlled device.

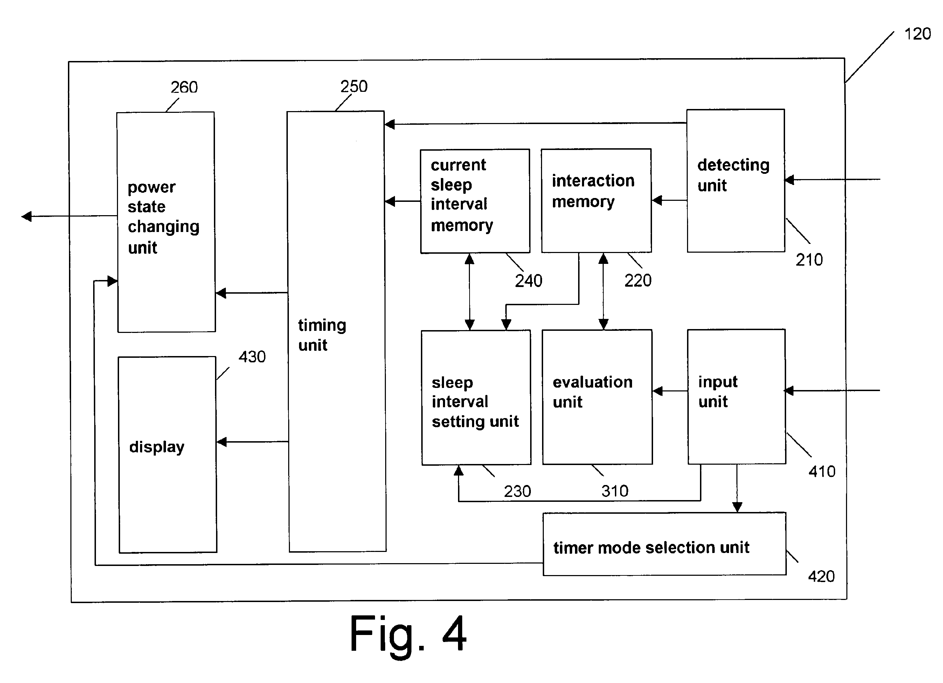

A further detailed embodiment of the present invention illustrated in Fig. 4 additionally comprises an input unit 410, a timer mode selection unit 420 and a display 430. The data inputted by the user through the input unit 410 serves for setting the processing mode of the evaluation unit 310. For instance, only one of the above-mentioned statistical evaluation results is selected to be calculated and stored in the interaction memory 220 and to be used as a basis for the determination of the sleep interval.

Further, the user input may control the operation of the sleep interval-setting unit 230. For this purpose, an individual offset time can be added to the result of the statistical evaluation during the sleep interval determination. The sleep interval calculation can be expressed by the following equation: $Time_until_standby = selected_result_of_statistical_evaluation + individual_offset$

The individual offset may be set generally or may differ in accordance with the type of detected user interaction.

These parameters which define an individual "sleep time strategy" may be set individually for the different daytime periods corresponding to the timer modes. The time borderlines between the different daytime periods are input via input unit 410 to the timer mode selection unit 420. According to the predefined timer modes, the timer mode selection unit 420 controls the respective functional blocks of the sleep timer. For instance, as indicated by the corresponding arrow between timer mode selection unit 420 and power state changing unit 260 in Fig. 4, the timer mode selection unit can deactivate the power state changing unit 260 during certain day periods. It is to be noted that the operation of the timer mode selection unit 420 is not limited to a control of the power state changing unit 260. A skilled person is aware that any other unit can be controlled in a corresponding manner in accordance with the predefinition of the timer mode.

Before a power state change is effected, timer unit 250 displays a notification on display 430 informing the user that a power state change will be effected soon unless the user manipulates any or a predefined button of the user's (remote) control.

In the following, a detailed example of an analysis of user interaction data will be described. It is assumed that the user interacted with the device 10 times, and the following time-differences have been recorded (10 interactions i.e. 9 time-differences):
- 01 min
- 03 min
- 19 min
- 33 min
- 05 min
- 23 min
- 16 min
- 53 min
- 42 min

Accordingly, the user interactivity with the device has been monitored for 3 hours and 15 minutes ([1+3+19+33+5+23+16+53+42]min = 195min = 3h15min). To obtain the sorted list the individual time differences have to be sorted in ascending or descending order. If we sort the data in ascending order, we get the following sorted list: 01 min /03min /05min /16min /19min /23min /33min /42min /53min. Now it is straightforward to obtain the above mentioned statistical evaluation results. The minimal value of the time interval between two subsequent interactions is xₘᵢₙ= 1 min, the maximal value of said interval is xₘₐₓ= 53 min. The average value of all time intervals between two subsequent user interactions is x_{avg} = 195min / 9 = 21 min. The span of the values of said interval is xₛₚₐₙ = xₘₐₓ - xₘᵢₙ = 53 min - 1 min = 52 min. The median value of the sorted list (we have an odd number of values) is x_{med}⁼ x-value of ("number of values" +1/2) = x_of (9 +1/2) = x_of (5) = 19 -> 5^{th} value is x_{med}⁼ 19min.

These are just some possible results of the statistical analysis. In a preferred embodiment of the invention the user has the possibility to select, which kind of result he wants to be used for standby-time calculation (stand by-strategy). This can be either one of the above mentioned examples, a combination from those or any other statistical result that is meaningful for the concrete controlled device. Moreover, the user can combine the selected result of the statistical evaluation with a freely selectable offset-value. Thereby the user is given enough freedom to set the work of the sleep timer in accordance with his individual needs.

It is assumed in the following that the user has chosen an individual offset time value of 45min. Using the 5 statistical results described above, the following standby-times are calculated by adding the offset value of 45min:

Using xₘᵢₙ -> 1 min + 45 min = 46 min

Using xₘₐₓ -> 53 min + 45 min = 98 min

Using x_{avg} -> 21 min + 45 min = 66 min

Using xₛₚₐₙ -> 52 min + 45 min = 97 min

Using x_{med} -> 19 min + 45 min = 64 min

For instance, if the user has selected the standby-strategy of "using the maximum-value" combined with an individual offset of 45 min, the device will be automatically switched to standby-mode after 98 min of missing user interactivity.

In the following it is described, how the sleep timer of our detailed example reacts, if the number of detected interaction data exceeds the capacity of the interaction memory. Therefore it is assumed that the number of 9 collected user data as described above is the maximum capacity of said memory. Moreover, it is assumed that the user is not fallen asleep so far and is interacting with the device 4 more times. Thereby are, for instance, recorded the following 4 new monitored time-differences between two subsequent user interactions:
- 33 min
- 78 min
- 36 min
- 21 min

Because the maximum of time interval values that can be stored in the memory is 9, the new 4 values will shift out the 4 values detected first. So we get a new unsorted list of time-differences:
- 05 min
- 23 min
- 16min
- 53 min
- 42 min
- 33 min
- 78 min
- 36 min
- 21 min

This means, that the user interactivity, which will be used for analysis is now 5 hours and 7 minutes [(5+23+16+53+42+33+78+36+21)min = 307min = 5h07min].

Sort the recorded interaction time interval data once more in ascending order we obtain the following sorted list of time intervals: 05min/ 16min/ 21 min/ 23min/ 33min/ 36min/ 42min/ 53min/ 78min. The minimal value now is xₘᵢₙ= 5min, the maximal value is xₘₐₓ= 78 min. The average value changes to x_{avg} = 107min / 9 = 34,1 min = approx. 34 min. The span is xₛₚₐₙ = xₘₐₓ - xₘᵢₙ = 78 min - 5 min = 73 min. The median value of the new sorted list (we have an odd number of values) is x_{med} = x-value of ("number of values" +1/2) = x_of (9 +1/2) = x_of (5) = 33 ->5^{th} value is 33 min.

When it is assumed that the user did not change the individual offset time value of 45min, the resulting possible standby-time-values corresponding to the different statistical evaluation results described above and calculated after the 4 newly detected user interactions are:

Using xₘᵢₙ -> 5 min + 45 min = 50 min

Using xₘₐₓ -> 78 min + 45 min = 123 min

Using x_{avg} -> 34 min + 45 min = 97 min

Using xₛₚₐₙ -> 73 min + 45 min =118 min

Using x_{med} -> 33 min + 45 min = 78 min

Assuming that the user did not change the standby-strategy (i.e. continues to use the maximum value of the time interval between two subsequent interactions), the time to elapse after the last detected user interaction before the sleep-timer automatically switches into standby the device changes from 98 min (according to the first described statistical analysis) to 123 min (according to the second described statistical analysis).

Because the device is monitoring every user interaction and is doing a statistical analysis after every interaction, the standby-time is always adapted to the current usage. Additionally, a user is given the possibility to choose between several standby-strategies and to set an individual offset. Thus, the advanced sleep-timer can be easily setup for a particular user. This must be done only once in the beginning, and maybe a few times fine-tuned by the user.

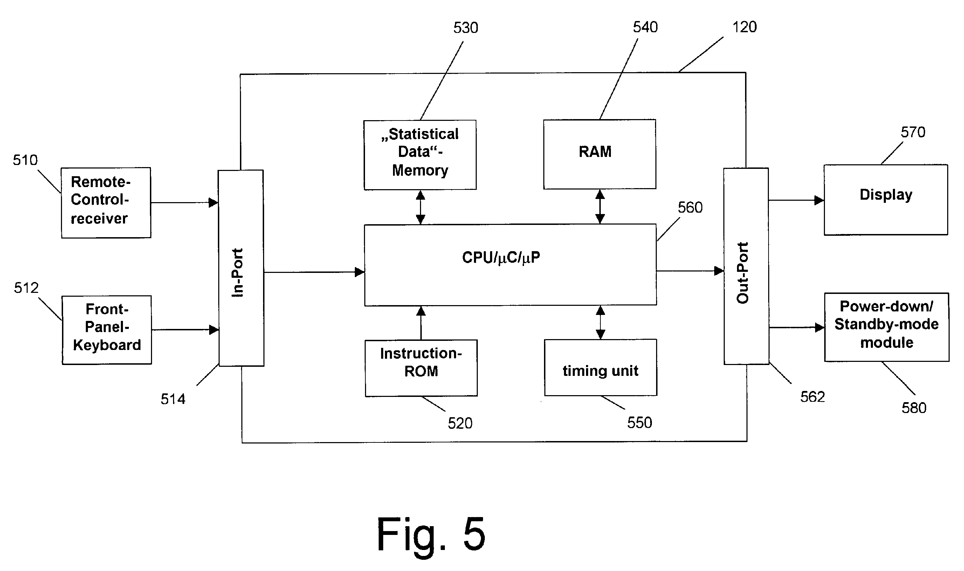

A more detailed example configuration of a sleep timer in accordance with the present invention is illustrated in Fig. 5. This configuration comprises an input interface 514 receiving control commands from a remote control receiver 510 or/and from a front panel keyboard 512. The input interface 514 further provides the function of the above-described detection unit, i.e. to detect a user interaction for adjusting the sleep interval accordingly. The skilled person is aware that the detection function may also be associated to another functional block of the sleep timer shown in Fig. 5 or be provided as a separate block in the sleep timer configuration.

The remote control and front panel keyboards also serve for inputting control commands to the sleep timer.

The functionality of the evaluation unit, the sleep interval setting unit and the memory is implemented in the configuration shown in Fig. 5 by a central processing unit (CPU), micro controller (µC) or micro processor (µP) 560, a statistical data memory 530 and a random access memory (RAM) 540. The instruction-read-only memory (ROM) 520 contains the program instructions for the handling of the statistical data by the CPU 560.

A timing unit 550 counting the time elapsed since a last detected user interaction is reset upon each detection of a user interaction and activated based on the current sleep interval length by CPU 560. When the count value equals the current sleep interval, the timing unit 550 informs the CPU 560 accordingly. The CPU 560 in turn issues a notification to display 570 via output 562 as an interface to display 570 and to power-down/standby module 580 in case a power state change has to be preformed.

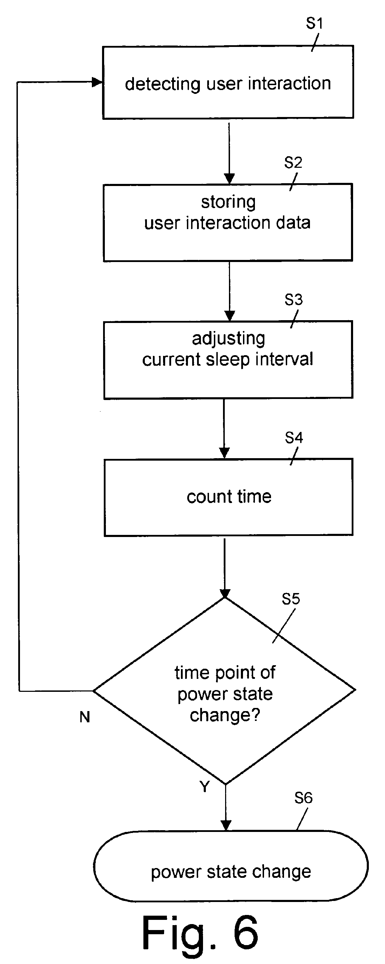

The operation of the power state control method according to the present invention is show in Fig. 6. Any user interaction with the device to be controlled is detected in step S1 and the corresponding interaction data is stored in a memory in step S2. As described above, a user interaction is preferably any manipulation of a control button of the device and the interaction data is either a time stamp marking in order to record the absolute time points of the detected interaction or a record of time intervals between subsequent interactions.

It is the particular advantage of storing time stamps which represent a detected user interaction, that the user's interaction history reflect the detailed points in time of each user interaction. The evaluation result based thereon may differ depending on the processing mode applicable at that time. For example, the borders between the daytime periods for the different processing modes may have been modified by the user. The statistical evaluation will then recalculate the evaluation results based on the chanced processing parameters.

The (re-) calculation of a statistical evaluation based on the memorized time stamps should not take time periods into account during that the device was not active. For this purpose, an additional time stamp may be stored indicating each power-on or power-off operation. Based on such an additional time stamp the time intervals during which the device was not in use can be easily excluded from evaluation.

An alternative is to perform the evaluation of the user's interaction activity only on the basis of the data from the current activation period. Therefore, the sleep timer should not take into account those time stamps, which have been stored before the last power-on of the device. Based on the additional time stamp indicating power-on or power-off operation the interaction data of the current activation period can be easily distinguished from those of earlier activation periods. This is advantageous, if different users with different behaviour subsequently use one and the same device.

Alternatively, if a counter is used to directly measure and store the intervals between two subsequent interactions of the user with the device. In this case, the current count-value is saved, when an interaction of the user with the device is detected. After each detection of a user interaction the counter is reset and activated again for the next count.

It is the particular advantage of measuring time intervals between subsequent user interactions, that those periods, when the device is not active, are excluded automatically. However, in case of a change of the borderlines between daytime periods for the timer processing modes, the "old" interval values stored previously must be either deleted, or some failure occurs directly after the change.

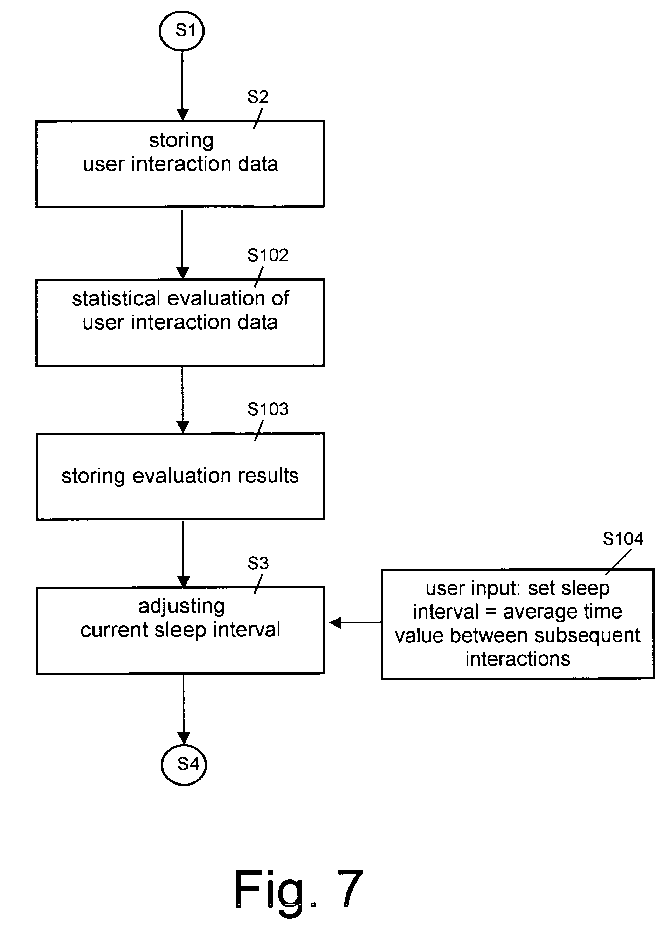

The adjustment of the current sleep interval is performed in step S3. According to the preferred embodiment of the present invention, the user interaction history is subjected to a statistical evaluation. Details thereof will be described in connection with Fig. 7 below.

The next step S4 counts the time elapsed from the last detected user interaction until the current sleep interval has elapsed (step S5). Upon detection that the time of the current sleep interval elapsed, the time point of a power state change has been reached and the power state change is performed in step S6.

A flow chart illustrating a more detailed operation of the statistical evaluation in accordance with a preferred embodiment of the present invention is shown in Fig. 7.

Based on the user interaction history stored in step S2, the stored data are subjected to a predefined statistical evaluation (step S102). The results of the evaluation are also stored (step S103) in the memory and employed for adjusting the current sleep interval. The current sleep interval is preferably stored in a separate memory or memory area.

A user input step S104 provides the current sleep interval adjusting step S3 with the necessary parameters, i.e. in which manner the evaluation result has to be taken into account when adjusting the sleep interval. For instance, the sleep interval has to be set to the calculated mean value occurring between subsequent user interactions.

Further, the user input may determine a certain power change strategy of the individual user.

As described above in connection with Fig. 4, the user input S104 also may control the statistical evaluation such that only that statistical evaluation is performed required for the selected adjustment mode.

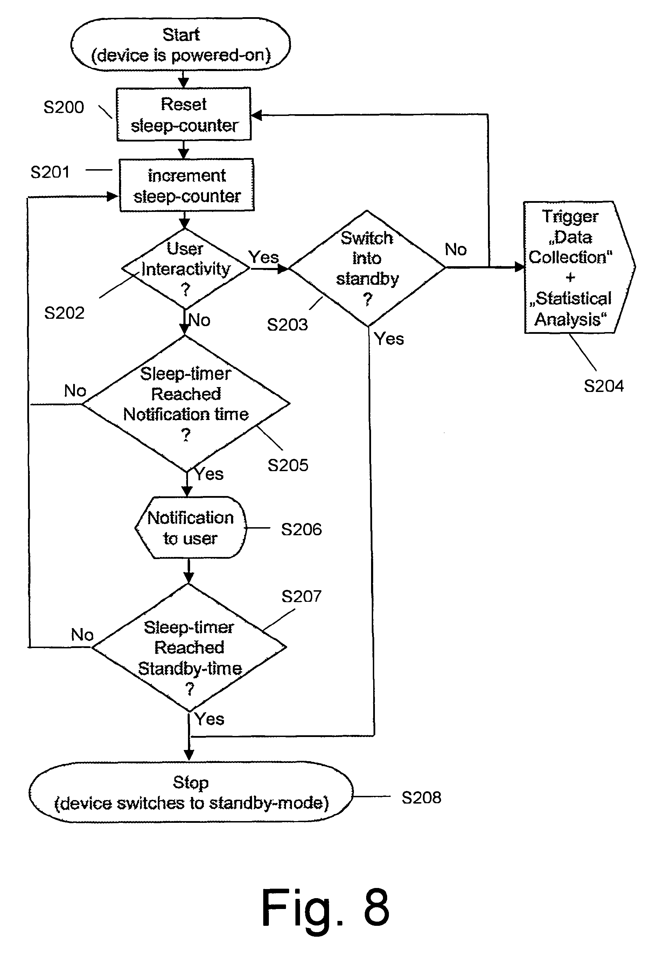

The operation of a sleep timer in accordance with a particular embodiment of the present invention is now described by referring to Fig. 8. The sleep timer is switching a device to standby mode after a certain time interval has elapsed. Before a power state change is finally effected, the user is notified accordingly and the user's instructions to the contrary are expected.

The time remaining before a power state change is effected is calculated by a sleep counter. The sleep counter is first reset upon powering-on the device. As time passes, the sleep counter is incremented (step S201) and the user's interaction activity is continuously monitored (step S202).

If a user interaction has been detected in step S202, step S203 decides whether the user commands a manual switch into standby state or not. A manual switch into standby state results in a direct branch of the operation to final step S208 of the flow chart.

If no immediate switch to stand-by mode is detected in step S203, the user's interaction history is updated in step S 204. Moreover, the sleep counter is reset once more and the workflow of the sleep timer starts again at step S200.

As long as no user interaction is detected, the count value of the sleep timer is continuously monitored and compared with a "notification time". The notification time represents a certain point of time lying a predefined time period before the sleep interval has completely elapsed. If the notification time is not reached by the current count value, the sleep counter is continuously incremented (step S201). Otherwise, a notification to the user is output in step S206, and the user may react to the notification by any interaction with the device to avoid the forthcoming automatic switch into the stand-by mode.

As long as the user does not respond to the notification, the count value of the sleep timer is compared to the length of the sleep interval (step S207). Upon reaching the sleep interval, the device is automatically switched into standby mode and the sleep timer operation is terminated.

Although the sleep counter operation has been described by incrementing a count value continuously, the skilled person is aware that the sleep counter may be implemented in reverse manner by decreasing a given start value. Upon reaching a fixed value, the notification to the user is issued and upon reaching the count value "zero", the device's power state is switched.

The sleep timer operation will now be described by way of example wherein the sleep timer parameters are assumed to be set as follows:
- *timer is enabled during daytime-period "night"*
- *the time-value to change between "day" and "night" is set to 7 p.m.*
- *the statistical average interaction interval of* 33 *min should be used for the sleep interval adjustment*
- *the "individual offset" is set to 55 min*
- *the "notification time before standby" is set to 3 min*

The user switches on the device at, let's say, 5 p.m. Every user interaction is monitored, but because it is earlier than 7 p.m., the device will not be automatically set into standby. When time goes by and passes 7 p.m., the daytime-period settings for the "night"-period become effective. User interaction is still monitored and statistically analysed. Upon each detection of a user interaction, the counter is reset. If the detected user interactivity stops, which may be a result of a user which has been fallen asleep, the counter is not reset. The count value is continuously incremented until the counter reaches 85 min. The value of 85 min corresponds to the following accumulation: $\begin{matrix}average interaction interval + individual offset - notification time before standby \\ = 33 min + 55 min - 3 min\end{matrix}$

A notification to the user is output at this time informing the user that the device will soon change into standby mode. If no further user interaction is detected and the counter reaches a count value corresponding to 88 min (average interaction interval + individual offset), the device will be automatically switched to standby mode.

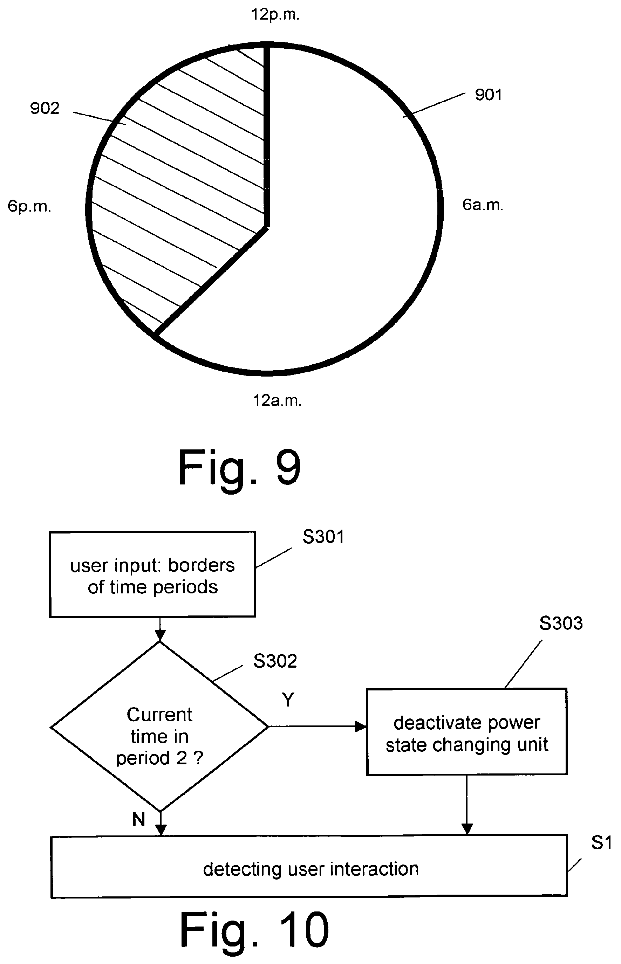

Fig. 9 is a schematic representation of two time periods of the day. Each of the time periods is associated to a different working mode of the sleep timer. In the given example, the first time period 901 corresponds to the daytime and the second time period 902 corresponds to the nighttime. As shown in Fig.9, a switch from daytime to nighttime occurs at 3 p.m, while at midnight the timer mode is reset to the daytime mode.

The different daytime periods can be taken into account by the sleep timer, for example, in order to prevent any switch to standby during daytime periods, when they are most likely not required. A specific embodiment showing the different processing procedures applied during different daytime periods is illustrated in Fig. 10. It is assumed, that a user has set the borderlines of the daytime periods in step S301 and that during certain daytime periods referred to as period 2 in the Fig. 10 no power state change should occur. Therefore, it is continuously monitored in step S302 whether or not the current daytime falls into period 2. If the current daytime falls into the predefined period 2, the power state changing unit is deactivated in order not to perform any power state change.

Although the previous description only relates to two daytime periods corresponding to two-timer modes, the present invention is not limited thereto. As it is obvious for a skilled person, more daytime periods and corresponding working modes can be introduced in a straightforward manner.

In summary, the present invention provides a sleep timer taking the individual user behaviour into account. While in conventional sleep timers, the time interval before a device is powered off or set into standby is either fixed or has to be manually selected from a preset range of values, the sleep timer of the present invention automatically adjusts the time interval on the basis of an evaluation of the user's interaction history with the device. Moreover, the user can define an individual standby strategy by setting the sleep timer's parameters accordingly.

## Claims

1. A sleep timer for changing the power state of a controlled device (100) in accordance with a sleep interval, said sleep interval indicating the remaining time interval until automatic change of said power state, comprising:
a detecting unit (210) for detecting user interactions with said controlled device (100),
a memory (220,240) for storing the user's interaction history with said controlled device (100),
a sleep interval setting unit (230) for adjusting a current value of said sleep interval based on said stored interaction history,
a timing unit (250) for determining a power state changing point of time based on the current sleep interval, and
a power state changing unit (260) for initiating a power state change of said controlled device (100) at said power state changing point of time.

2. A sleep timer according to claim 1, wherein said detecting unit (210) detecting timestamps of said user interactions and said memory (220,240) stores said detected timestamps.

3. A sleep timer according to claim 1, wherein said detecting unit (210) detecting the time intervals between two subsequent of said user interactions and said memory (220,240) stores said detected time intervals.

4. A sleep timer according to claim 2 or 3, wherein said detecting unit (210) additionally detecting the type of said user interaction and said memory (220,240) additionally stores said type of said user interaction.

5. A sleep timer according to any of claims 1 to 4, further comprising an evaluation unit (310) for performing a statistical evaluation of said interaction history of the user with said controlled device (100).

6. A sleep timer according to claim 5, wherein said memory (220,240) is adapted for storing the results of said statistical evaluation performed by said evaluation unit (310).

7. A sleep timer according to claim 5 or 6, wherein said sleep interval is determined based on the results of said statistical evaluation.

8. A sleep timer according to any of claims 1 to 7, further comprising an input unit (410) for inputting user instructions, said user instructions defining individual sleep timer parameters.

9. A sleep timer according to claim 8, wherein said sleep interval setting unit (230) additionally taking user instructions into account, when determining said sleep interval.

10. A sleep timer according to claim 8 or 9, wherein said user instructions include an offset time to be added to said sleep interval.

11. A sleep timer according to any of claims 8 to 10, wherein said sleep interval setting unit (230) selecting in accordance with user instructions one of a plurality of predefined alternatives for taking said statistical data provided by said evaluation unit (310) into account.

12. A sleep timer according to any of claims 1 to 11, further comprising a timer mode selection unit (420) for selecting one of a plurality of processing modes of at least one of said evaluation unit (310), said sleep interval setting unit (230), said timing unit (250) and said power state changing unit (260).

13. A sleep timer according to claim 12, wherein said timer mode selection unit (420) performing said timer mode selection based on the current time of day.

14. A sleep timer according to claim 12 or 13, wherein said timer mode selection unit (420) performing said timer mode selection based on user instructions.

15. A sleep timer according to any of claims 11 to 14, wherein said input unit (410) includes a menu for selection of one of said plurality of predefined alternatives for taking said statistical data provided by said evaluation unit (310) into account.

16. A sleep timer according to any of claims 1 to 15, being adapted to providing a notification to the user at a predetermined notification interval before said power state changing point of time.

17. A sleep timer according to claim 16, wherein said predetermined notification interval is defined by user instructions.

18. A sleep timer according to any of claims 15 to 17, further comprising a display (430) for providing said menu and/or indicating said notification.

19. A sleep timer according to claim 18, wherein the display (430) is adapted to indicate said data stored in said memory (220,240) and the results of said statistical evaluation.

20. A sleep timer according to any of claims 1 to 19, wherein said timing unit (250) determines said power state changing point of time based on the time elapsed from a last detected user interaction.

21. A sleep timer according to any of claims 1 to 19, wherein said timing unit (250) determines said power state changing point of time based on the time elapsed from the last activation of the device.

22. A sleep timer according to any of claims 1 to 21, wherein said power state changing unit (260) is adopted to change the power state of said controlled device (100) from active to standby.

23. A sleep timer according to any of claims 1 to 21, wherein said power state changing unit (260) is adopted to power off said controlled device (100).

24. A sleep timer according to any of claims 1 to 23, wherein said controlled device (100) is one of a TV-set, a radio, a video recorder, a CD-player, a DVD-player, a CD/DVD-changer, a vehicle entertainment and information device, an amplifier, a set-top-box, a satellite-receiver, a printer, a copying machine, a unit of household equipment.

25. A method for changing the power state of a device in accordance with a sleep interval, said sleep interval indicating the remaining time interval until automatic change of said power state, comprising the steps of:
detecting user interactions with said device (S1),
storing the user's interaction history with said device (S2),
adjusting a current value of said sleep interval based on said stored interaction history (S3),
determining a power state changing point of time based on the current sleep interval (S4), and
initiating a power state change of said device at said power state changing point of time (S5,S6).

26. A method according to claim 25, wherein said detecting step (S1) detects timestamps of said user interactions and said memory stores said detected timestamps.

27. A method according to claim 25, wherein said detecting step (S1) detects the time intervals between two subsequent of said user interactions and said memory stores said detected time intervals.

28. A method according to claim 26 or 27, wherein said detecting step (S1) additionally detects the type of said user interaction and said storing step additionally stores said type of said user interaction.

29. A method according to any of claims 25 to 28, further comprising the step of a statistical evaluation (S102) of said interaction history of the user with said device.

30. A method according to claim 29, further storing (S103) the results of said statistical evaluation step (S102).

31. A method according to claim 29 or 30, wherein said sleep interval is determined based on the results of said statistical evaluation.

32. A method according to any of claims 25 to 31, further comprising an input step (S104) for inputting user instructions, said user instructions defining individual sleep timer parameters.

33. A method according to claim 32, wherein said sleep interval adjusting step (S3) additionally takes user instructions into account, when determining said sleep interval.

34. A method according to claim 32 or 33, wherein said user instructions include an offset time to be added to said sleep interval.

35. A method according to any of claims 32 to 34, wherein said sleep interval adjusting step (S3) in accordance with user instructions selects one of a plurality of predefined alternatives for taking said statistical data provided by said statistical evaluation step (S102) into account.

36. A method according to any of claims 25 to 35, further comprising a timer mode selection step (S302) for selecting one of a plurality of modes of work of at east one of said statistical evaluation step (S102), said sleep interval adjusting step (S3), said power state time point determining step (S4) and said power state changing step (S6).

37. A method according to claim 36, wherein said timer mode selection step (S302) performs said timer mode selection based on the current time of day.

38. A method according to claim 36 or 37, wherein said timer mode selection step (S302) performs said timer mode selection based on user instructions.

39. A method according to any of claims 35 to 38, wherein said input step (S104) performs the selection of one of said plurality of predefined alternatives for taking said statistical data provided by said statistical evaluation step into account using a menu.

40. A method according to any of claims 25 to 39, further comprising a notification step (S206) providing a notification to the user at a predetermined notification interval before said power state changing point of time.

41. A method according to claim 40, wherein said predetermined notification interval is defined by user instructions.

42. A method according to claim 40 or 41, wherein said notification is indicated on a display or wherein said notification is indicated acoustically.

43. A method according to any of claims 25 to 42, further comprising the step of displaying the data stored in any of said storing steps.

44. A method according to any of claims 25 to 43, wherein said power state changing point of time determining step (S4) determines said power state changing point of time based on the time elapsed from a last detected user interaction.

45. A method according to any of claims 25 to 43, wherein said power state changing point of time determining step (S4) determines said power state changing point of time based on the time elapsed from the last activation of the device.

46. A method according to any of claims 25 to 45, wherein said power state changing step (S6) changes the power state of said device from active to standby.

47. A method according to any of claims 25 to 45, wherein said power state changing step (S6) powers off said device.

48. A method according to any of claims 25 to 47, wherein said device is one of a TV-set, a radio, a video recorder, a CD-player, a DVD-player, a CD/DVD-changer, a vehicle entertainment and information device, an amplifier, a set-top-box, a satellite-receiver, a printer, a copying machine, a unit of household equipment.
